# EUROPÄISCHE PATENTSCHRIFT

(11) **EP 0 445 500 B1**
(45) Veröffentlichungstag und Bekanntmachung des Hinweises auf die Patenterteilung: **07.09.1994**
(21) Anmeldenummer: 91100073.5
(22) Anmeldetag: 02.01.1991
(51) Int. Cl.: B24C 5/02, A61C 3/025

(54) **Abdeckbecher für ein Sandstrahlgerät**
Shroud for a sand-blasting tool
Capot pour un outil de sablage

(30) Priorität: 26.02.1990 DE 9002268 U
(43) Veröffentlichungstag der Anmeldung: 11.09.1991
(73) Patentinhaber: THERA Patent GmbH & Co. KG Gesellschaft für industrielle Schutzrechte, D-82229 Seefeld (DE)
(72) Erfinder: Herold, Wolf-Dietrich, Dr., W-8031 Seefeld 2 (DE); Koran, Peter, Dr., W-8120 Weilheim (DE); Haas, Rudolf, W-8035 Unterbrunn (DE)
(74) Vertreter: Strehl Schübel-Hopf Groening & Partner

(56) Entgegenhaltungen:
- EP-A- 0 143 617
- EP-A- 0 163 610
- EP-A- 0 182 983
- EP-A- 0 299 229
- EP-A- 0 314 022
- DE-U- 8 816 199
- FR-A- 2 565 877
- FR-A- 2 572 925
- FR-A- 2 588 182
- US-A- 2 637 107
- US-A- 4 212 138
- US-A- 4 776 794

## Beschreibung

Ein auf den Behandlungsort aufsetzbarer Abdeckbecher für ein Sandstrahlgerät mit den im ersten Teil des Anspruchs 1 angegebenen Merkmalen ist aus US-A-4 212 138 bekannt. Der bekannte Abdeckbecher besteht insgesamt aus Gewebe, in das am einen Ende eine Dichtung zum Aufschieben auf das Sandstrahlgerät eingearbeitet ist, während das andere Ende mit einem Kunststoffring vernietet ist, in den ein Dichtungsring aus Schaumstoff eingefügt ist. An dem Kunststoffring ist ein Handgriff angeordnet. Beim Gebrauch hält die Bedienungsperson mit der einen Hand das Sandstrahlgerät, während sie die andere Hand dazu benötigt, den Dichtungsring gegen die Behandlungsstelle zu drücken.

Der Erfindung liegt die Aufgabe zugrunde, eine zweckmäßige und unaufwendige Abdeckkappe für ein Sandstrahlgerät anzugeben.

Die erfindungsgemäße Lösung dieser Aufgabe ist im Anspruch 1 gekennzeichnet. Der danach verwendete Schaumstoff als Filtermaterial eignet sich gut zum Schutz der Umgebung gegen Verschmutzung auch bei Verwendung von äußerst feinem, pulverartigem Strahlgut.

Die Unteransprüche betreffen vorzugsweise Gestaltungen zur Erzielung einer guten Abdichtung des Behandlungsbereiches, auch der Mundpartie eines Patienten, sowie die leichte Beobachtbarkeit der Behandlungsstelle während der Arbeit.

Bevorzugte Ausführungsbeispiele werden nachstehend anhand der Zeichnung näher erläutert; darin zeigt
- Figur 1: einen Längsschnitt durch ein Sandstrahlgerät,
- Figur 2: den vorderen Teil des Gerätes nach Figur 1 in vergrößertem Maßstab und einer um 90° gedrehten Stellung,
- Figur 3: einen Längsschnitt durch eine gegebenenfalls in Verbindung mit dem Gerät nach Figur 1 verwendete Abdeckung für den Behandlungsort, und
- Figur 4: eine der Figur 3 ähnliche Darstellung einer Abdeckung gemäß einer Variante.

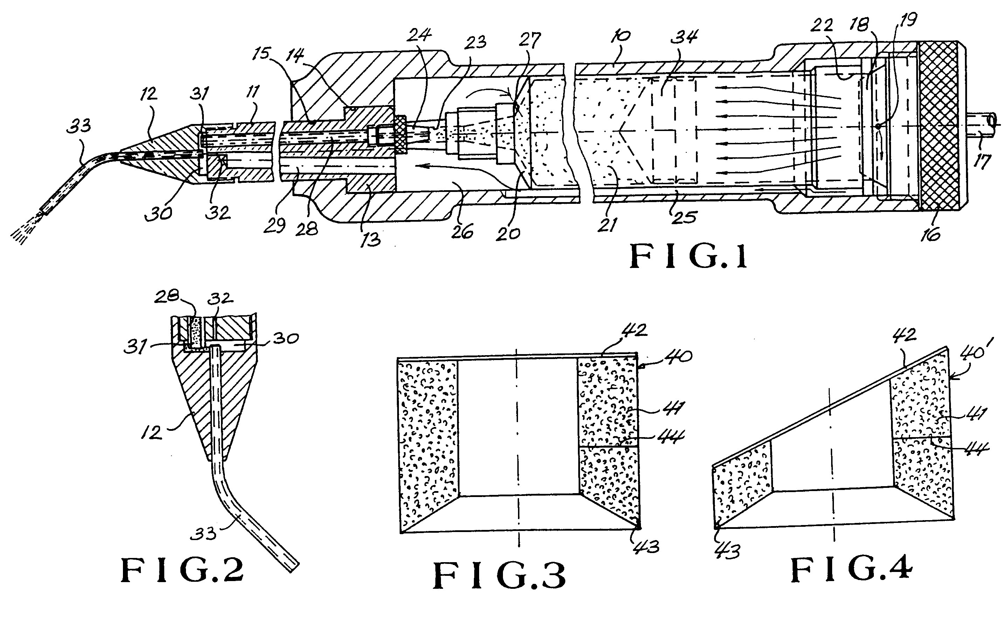

Das in Figur 1 gezeigte Sandstrahlgerät, das nicht Gegenstand der Patentansprüche ist, ist aus drei Hauptbestandteilen zusammengesetzt: einem Griffteil 10, einem Zwischenstück 11 und einem Düsenkopf 12. Das Zwischenstück 11 liegt mit einem Flansch 13 in einer Vertiefung 14 im vorderen Bereich des Griffteils 10 und durchsetzt mit seinem etwas schlankeren Hauptteil eine an die Vertiefung 14 ansetzende Bohrung 15. Der Düsenkopf 12 ist auf das vordere Ende des Zwischenstücks 11 aufgeschraubt.

Das Griffteil 10 ist als Hohlzylinder gestaltet und an seinem hinteren Ende durch eine Schraube 16 verschlossen. Die Schraube 16 ist mit einem Stutzen 17 für den Anschluß eines Schlauches zur Zuführung von Druckluft versehen. Dieser Stutzen steht in Verbindung mit einer ins Innere des Griffteils 10 gerichteten großflächigen Auslaßdüse 18, die eine nach vorne konisch zulaufenden Außenfläche und eine die Seitenwand durchsetzende Querbohrung 19 aufweist.

In Figur 1 ist eine in den hohlzylindrischen Innenraum des Griffteils 10 eingeführte Kartusche 20 gezeigt, die das aus einem sehr feinen Sand oder Pulver bestehende Strahlgut 21 enthält. Die Kartusche 20 ruht mit ihrer hinteren Öffnung 22 auf der konischen Außenfläche der Auslaßdüse 18 einerseits und an ihrem vorderen Ende mit einer sich an der Spitze leicht konisch erweiternden Austrittsöffnung 23 auf der entsprechend konisch geformten Außenwand eines Eintrittsstutzens 24 des Zwischenstücks 11 andererseits. Nach dem Einführen der Kartusche 20 in das Griffteil 10 wird die Schraube 16 so weit eingeschraubt, daß die Kartusche zwischen den beiden konischen Flächen der Auslaßdüse 18 der Schraube 16 und des Eintrittsstutzens 24 des Zwischenstücks 11 dicht eingespannt ist.

In der zylindrischen Innenwand des Griffteils 10 ist eine Längsnut 25 vorgesehen, die über die gesamte Länge des zylindrischen Hauptteils der Kartusche 20 verläuft und einen Strömungsweg für Druckluft von der Querbohrung 19 in der Düse 18 zu der am vorderen Ende des Innenraums des Griffteils 10 gelegenen Kammer 26 bildet. Die Kartusche 20 weist in dem Bereich, in dem sich der verhältnismäßig große Querschnitt ihres zylindrischen Hauptraums auf den wesentlich geringeren Querschnitt der Austrittsöffnung 23 verringert, in ihrer Wandung eine Bohrung 27 auf, durch die Druckluft aus der Kammer 26 in das Innere der Kartusche 20 gelangen kann, um das Strahlgut in diesem Bereich zu fluidisieren.

Das Zwischenstück 11 wird in Längsrichtung von zwei Kanälen 28 und 29 durchsetzt, wobei der Kanal 28 zur Zuführung des Strahlgutes vom Eintrittsstutzen 24 zu einer zwischen der vorderen Fläche des Zwischenstücks 11 und dem Düsenkopf 12 gebildeten Mischkammer 30 und der andere Kanal 29 zur Zuführung der Druckluft von der Kammer 26 zu der Mischkammer 30 dient. Der Zuführkanal 28 ragt an seinem vorderen Ende mit einem Stutzen 31 über die Vorderfläche des Zwischenstücks 11 hinaus in die Mischkammer 30 hinein. Der Druckluftkanal 29 mündet an seinem vorderen Ende mit einem dünnen Düsenkanal 32 in die Mischkammer 30.

In den Düsenkopf 12 ist ein gekrümmtes Düsenrohr 33 eingesetzt, gesetzt, das mit seinem hinteren Ende koaxial zu dem Düsenkanal 32 in die Mischkammer 30 hineinragt. Der Stutzen 31 des Strahlgut-Zuführkanals 28 und das hintere Ende des Düsenrohrs 33 ragen seitlich zueinander versetzt von entgegengesetzten Enden her in die Mischkammer 30 so weit hinein, daß sie in Strömungsrichtung einander überlappen. Durch diese Konfiguration wird die weiter unten erläuterte "Labyrinthdichtung" bewirkt.

Wird das Gerät mit Druckluft beaufschlagt, so strömt diese durch die Auslaßdüse 18 gegen einen die Kartusche nach hinten abdichtenden Kolben 34 und drückt das Strahlgut 21 in Richtung der Austrittsöffnung 23. Ein Teil der Druckluft strömt ferner durch die Querbohrung 19 und die Längsnut 25 an der Außenseite der Kartusche 20 vorbei und gelangt in die Kammer 26, wo wiederum ein Teil der Druckluft durch die Bohrung 27 in die Kartusche 20 einströmt und das Strahlgut fluidisiert oder auflockert, so daß es auch in dem engen Querschnitt der Austrittsöffnung 23 und des das Zwischenstück 11 durchsetzenden Zuführkanals 28 strömungsfähig bleibt und durch den Stutzen 31 in die Mischkammer 30 austritt. Die Druckluft strömt von der Zwischenkammer 26 durch den Druckluftkanal 29 und den Düsenkanal 32 des Zwischenstücks 11 ebenfalls in die Mischkammer 30, wo die am Ende des Düsenkanals 32 vorgesehene Querschnittserweiterung einen Unterdruck bewirkt. Dieser saugt das Strahlgut in den Luftstrom hinein, so daß das sich bildende Gemisch in das Düsenrohr 33 gelangt, in dem das Strahlgut auf die Endgeschwindigkeit der Druckluft beschleunigt wird und als Strahlgut-Luftgemisch austritt.

Wird das Gerät bei abgeschalteter Druckluft in der in Figur 2 gezeigten Positionierung, d.h. mit nach unten weisender Düse, gehalten, so wäre es grundsätzlich möglich, daß das Strahlgut weiterrieseln und sich über das Düsenrohr entleeren würde. Dies wird durch die oben angesprochene labyrinthartige Gestaltung in der Mischkammer 30 verhindert. Füllt sich nämlich die Mischkammer 30 in der in Figur 2 gezeigten Positionierung so weit mit Strahlgut auf, daß das untere Ende des Stutzens 31 verschlossen wird, so bildet diese Strahlgutschicht eine Barriere für ein weiteres Nachrutschen. Bei dieser Füllhöhe der Mischkammer 30 wird aber das obere Einlaßende des Düsenrohrs 33 noch nicht erreicht, so daß auch ein Austreten durch das Düsenrohr 33 verhindert ist.

Anstelle der oben beschriebenen Druckluftversorgung des Sandstrahlgerätes über einen an den Stutzen 17 angeschlossenen Schlauch kann auch mit einer Treibgaspatrone gearbeitet werden, die mit dem Griffteil 10 fest verbunden oder auch zusätzlich zu der Strahlgut-Kartusche 20 in das Griffteil 10 einführbar sein kann. In diesem Fall wird das gesamte Gerät von einer stationären Druckluftquelle unabhängig und vollständig frei beweglich.

Der in Figur 3 gezeigte Abdeckbecher 40 besteht aus einem Schaumstoffring 41, auf dessen eine Stirnfläche ein Sichtfenster 42 aus klarem Kunststoff aufgeklebt ist. Die von dem Sichtfenster 42 abgewandte Becherkante 43 ist abgeschrägt und läßt sich dadurch auch auf unebene Bereiche abdichtend aufdrücken. Der Schaumstoffring 41 ist mit einem seine Umfangswand durchsetzenden Schnitt 44 versehen, durch den hindurch sich das vordere Teil des Gerätes nach Figur 1, d.h. das Düsenrohr 33, der sich erweiternde Düsenkopf 12 und, soweit erforderlich, das Zwischenstück 11, hindurchführen läßt, um das vordere Ende des Düsenrohrs 33 in dem erforderlichen geringen Abstand an den zu behandelnden Ort zu bringen. Handelt es sich beispielsweise um eine in situ zu behandelnde Zahnfläche, so wird der Abdeckbecher 40 auf den Mund des Patienten aufgesetzt, um die Umgebung gegen Verschmutzung durch das sehr feine, pulverförmige Strahlgut zu schützen, wobei der Rachen mit einem Kofferdam abzudecken ist.

Das verwendete Schaumstoffmaterial wirkt als Filter, wobei die überschüssige Luft durch den Schaumstoffring 41 gereinigt nach außen treten kann. Zusätzlich kann durch einen weiteren (in Figur 3 nicht gezeigten) dem Schnitt 44 ähnlichen Durchgriff eine Absaugvorrichtung in das Innere der von dem Abdeckbecher 40 gebildeten "Sandstrahlkabine" eingeführt werden.

In der Variante nach Figur 4 unterscheidet sich der Abdeckbecher 40' von der Ausführungsform nach Figur 3 dadurch, daß die Sichtscheibe 42 schräg zu der von der Becherkante 43 gebildeten Ebene verläuft, was für bestimmte Anwendungsfälle günstig ist.

## Patentansprüche

1. Auf den Behandlungsort aufsetzbarer Abdeckbecher für ein Sandstrahlgerät, der aus luftdurchlässigem Filtermaterial besteht und der dem Becherrand (43) gegenüber ein Sichtfenster (42) sowie in seiner Umfangswand eine Durchtrittsöffnung (44) für die Spitze des Sandstrahlgerätes aufweist, dadurch gekennzeichnet, daß das Filtermaterial Schaumstoff ist.

2. Abdeckbecher nach Anspruch 1, wobei die den Becherrand (43) bildende Schaumstoffkante spitz zuläuft.

3. Abdeckbecher nach Anspruch 1 oder 2, wobei das Sichtfenster (42) schräg zur Ebene des Becherrandes (43) verläuft.

4. Abdeckbecher nach einem der Ansprüche 1 bis 3, bestehend aus einem Schaumstoffring (41), auf dessen eine Stirnfläche das aus klarem Kunststoff bestehende Sichtfenster (42) aufgeklebt ist.

5. Abdeckbecher nach einem der Ansprüche 1 bis 4, wobei die Durchtrittsöffnung (44) von einem in dem Schaumstoffmaterial ausgeführten Schnitt gebildet ist.

## Claims

1. A cup-shaped shroud for a sand-blasting device, to be placed over a location to be treated, the shroud consisting of air-permeable filter material and having a viewing window (42) opposite the cup rim (43) and an opening (44) in its peripheral wall for the passage of the tip of the sand-blasting device, characterised in that the filter material is foamed plastics.

2. The shroud of claim 1, wherein the edge of foamed plastics forming the cup rim (43) is pointed.

3. The shroud of claim 1 or 2, wherein the viewing window (42) extends obliquely with respect to the plane of the cup rim (43).

4. The shroud of any one of claims 1 to 3, consisting of a ring (41) of foamed plastics, the viewing window (42) consisting of clear synthetic material and being adhered to one end surface of the ring.

5. The shroud of any one of claims 1 to 4, wherein the passage opening (44) is formed by a cut executed in the foamed plastics material.

## Revendications

1. Capot pour un outil de sablage, destiné à être mis en place sur le lieu d'utilisation, qui se compose de matériau filtrant perméable à l'air et présente à l'opposé du bord du capot (43) une fenêtre (42), et dans sa paroi périphérique, un orifice de passage (44) pour la pointe de l'outil de sablage, caractérisé par le fait que le matériau filtrant est une mousse.

2. Capot selon la revendication 1, dans lequel la face de mousse formant le bord du capot (43) présente une forme conique.

3. Capot selon la revendication 1 ou 2, dans lequel la fenêtre (42) est inclinée par rapport au plan du bord du capot (43).

4. Capot selon l'une des revendications 1 à 3, constitué d'une bague en mousse (41) sur une surface frontale de laquelle est collée la fenêtre (42) constituée d'une matière plastique transparente.

5. Capot selon l'une des revendications 1 à 4, dans lequel l'orifice de passage (44) est formé par une découpe réalisée dans le matériau en mousse.
